# EUROPEAN PATENT APPLICATION

(11) **EP 3 677 751 A1**
(43) Date of publication of application: **08.07.2020**
(21) Application number: 19213850.1
(22) Date of filing: 05.12.2019
(51) Int. Cl.: F01D 9/06

(54) **GAS TURBINE ENGINE BIFURCATION**

(30) Priority: 04.01.2019 GB 201900113
(71) Applicant: Rolls-Royce plc, London N1 9FX (GB)
(72) Inventor: Ingley, Lucian, Derby, Derbyshire DE24 8BJ (GB)
(74) Representative: Rolls-Royce plc

(57) **Abstract**

A gas turbine engine (10) comprising: an engine core (11); an annular flow passage (22) arranged around the engine core; and a bifurcation (42) extending below the engine core and having a length dimension spanning the annular flow passage (22). The bifurcation (42) comprises a housing that houses a conduit (46). The conduit has an inlet (54) at an engine core end of the bifurcation and extends along the length of the bifurcation. The conduit comprises a fire-resistant material and is configured to drain fluid from the engine core (11) and through the bifurcation (42) to an outlet (55).

## Description

### Field of the disclosure

The present disclosure relates to a bifurcation for a gas turbine engine, e.g. for a flow passage of a gas turbine engine.

### Background

In a gas turbine engine, such as a turbofan engine, a bifurcation spans the bypass flow duct. The bifurcation comprises a static support/pylon structure between an outer fan nacelle and an inner engine core casing. The interior of the bifurcation also houses and protects fuel lines, hydraulic lines, conduits, electrical lines, communication links and other components that support operation of the engine.

A radially inner end of the bifurcation is provided within a fire zone of the engine core. As such, the interior of the bifurcation is itself a fire zone. A fire zone represents a region within the gas turbine engine, in which there is a risk of a fire potentially occurring. This dictates that any components with the fire zone must have increase fire resistance and therefore places stringent requirements on the design and construction of the bifurcation as well as any lines passing through it.

It is an aim of the present disclosure to find an alternative bifurcation design configuration.

### Summary

The present disclosure provides a gas turbine engine and a bifurcation structure as set out in the appended claims.

According to a first aspect there is provided a gas turbine engine comprising: an engine core; an annular flow passage arranged around the engine core; and a bifurcation extending below the engine core and having a length dimension spanning the annular flow passage; wherein the bifurcation comprises a housing that houses a conduit, the conduit having an inlet at an engine core end of the bifurcation and extending along the length of the bifurcation, the conduit comprising a fire-resistant material and being configured to drain fluid from the engine core and through the bifurcation to an outlet.

The housing may comprise a profiled outer surface and sectional profile of the conduit may be shaped to follow at least a portion of the profile of the outer surface.

The conduit may comprise a different material to the housing and may provide structural reinforcement of the housing.

The inlet of the conduit may be located at a lowermost portion of the engine core.

The bifurcation may comprise a leading edge and a trailing edge, the conduit being located in the trailing edge of the bifurcation.

The conduit may be tapered or triangular in sectional profile.

The conduit may have a substantially constant sectional profile along its length.

The conduit may extend the full length of the bifurcation so as to isolate an interior of the conduit from a remainder of the interior of the bifurcation.

The fire resistant material may be titanium.

The gas turbine engine may further comprise one or more drain pipe mounted within the conduit.

The engine core may comprise a fluid trap that collects fluid for disposal through the conduit of the bifurcation.

The outlet of the conduit may open to a drain within a nacelle structure surrounding the annular flow passage.

The outlet of the conduit may drain to ambient.

The conduit may comprise an outlet that opens to a drain within a nacelle structure surrounding the annular flow passage.

The engine core may comprise a turbine, a compressor, and a core shaft connecting the turbine to the compressor; and the gas turbine engine may further comprise: a fan located upstream of the engine core, the fan may comprise a plurality of fan blades; a fan case; and a gearbox that receives an input from the core shaft and outputs drive to the fan so as to drive the fan at a lower rotational speed than the core shaft.

The turbine may be a first turbine, the compressor may be a first compressor, and the core shaft may be a first core shaft; the engine core may further comprise a second turbine, a second compressor, and a second core shaft connecting the second turbine to the second compressor; and the second turbine, the second compressor, and the second core shaft may be arranged to rotate at a higher rotational speed than the first core shaft.

According to a second aspect, there is provided a bifurcation structure for spanning an annular flow passage around an engine core of a gas turbine engine, the bifurcation structure comprising: a housing having a sectional profile and a first end arranged to be mounted to the engine core, the housing extending in a length direction of the bifurcation structure, wherein the bifurcation structure comprises a conduit having an inlet at the first end and extending through the length of the housing, the conduit having a sectional profile that defines a partition within the sectional profile of the housing.

### Brief description of the drawings

Embodiments will now be described by way of example only, with reference to the Figures, in which:
**Figure** 1 is a sectional side view of a gas turbine engine;
**Figure** 2 is a close up sectional side view of an upstream portion of a gas turbine engine;
**Figure** 3 is a partially cut-away view of a gearbox for a gas turbine engine;
**Figure 4** is a partially cut-away isometric view from the rear of a gas turbine engine;
**Figure 5** is a close-up side view of the bifurcation of Figure 4;
**Figure 6** shows an isolated isometric view and a view from above the bifurcation;
**Figure 7** shows an isometric view of a bifurcation with drain pipes and a close up view thereof; and
**Figure 8** shows sectional side view of a gas turbine engine with indication of different zones.

### Detailed description

Aspects and embodiments of the present disclosure will now be discussed with reference to the accompanying figures. Further aspects and embodiments will be apparent to those skilled in the art.

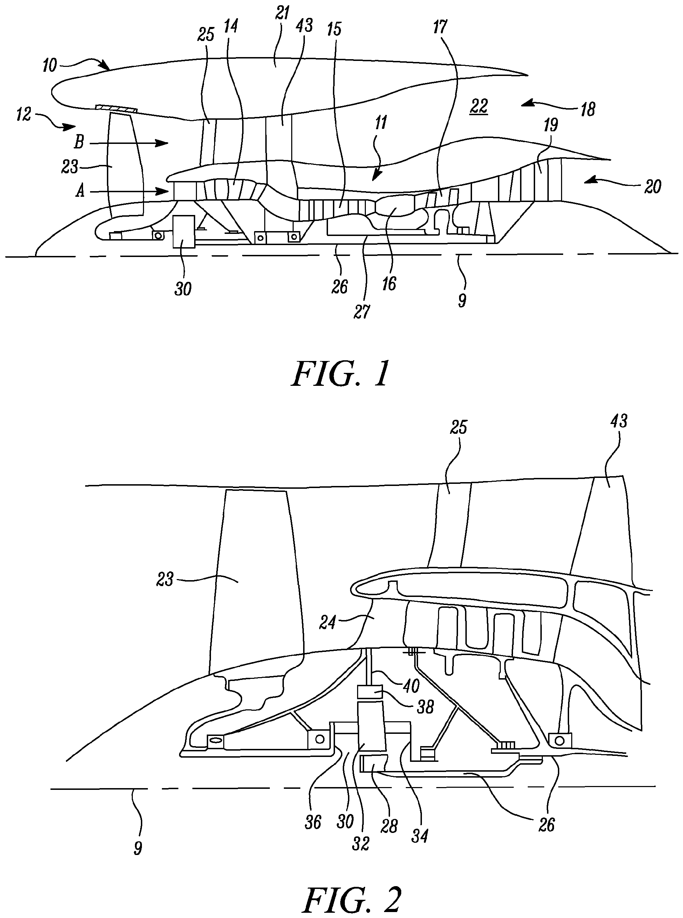

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises an engine core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

The bypass duct 22 comprises one or more outlet guide vanes 25.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure** 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

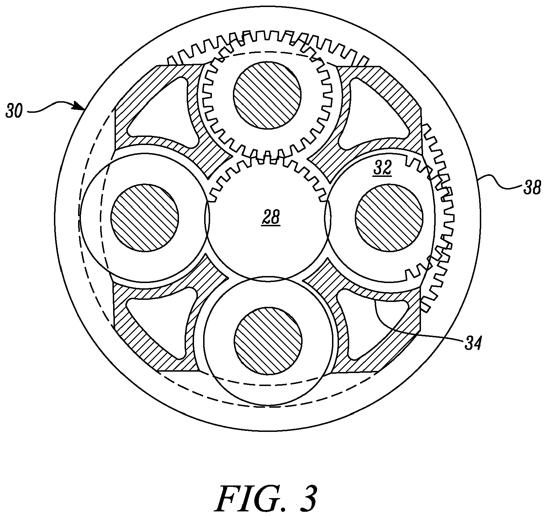

The epicyclic gearbox 30 is shown by way of example in greater detail in **Figure 3**. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20, meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the engine core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

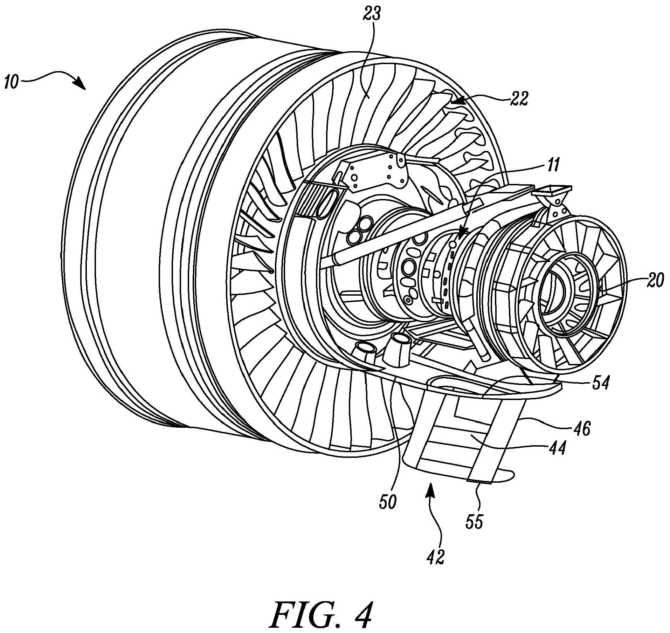

The following description concerns a bifurcation 42 of the gas turbine engine as shown in **Figure 4****.** The bifurcation 42 is located below the engine core 11 in Figure 4, whereas another bifurcation 43, shown in Figures 1 and 2, may be provided above the engine core 11. Each bifurcation 42, 43 spans the bypass duct 22, e.g. being located behind and/or downstream of the fan outlet guide vanes 25. That is to say each bifurcation 42, 43 provides a structural link between the engine core 11 and the nacelle 21 and thereby bifurcates the annular flow passage of the bypass duct 22.

Figure 4 illustrates a gas turbine engine comprising a lower bifurcation 42. The bifurcation 42 is attached at its upper end to the engine core 11, e.g. to a casing structure or outer casing wall 50 of the engine core 11. The engine core casing typically has radially inner and outer walls to define an interior volume of the casing, in which various engine accessories and lines are mounted. The upper end of the bifurcation 42 adjoins the outer casing wall 50 of the casing.

The bifurcation 42 is attached to a lowest point of the engine core 11, i.e. the lowest point of the outer casing wall 50 of the engine core 11. In this regard the outer casing wall 50 is curved in profile and achieves its lowest point part-way between the fore and aft ends of the casing. That is to say, the casing bulges or widens part-way along its length.

The outer casing wall 50 of the casing defines an inner annular wall of the bypass duct 22. The bifurcation 42 extends between the outer casing wall 50 and an outer wall 52 of the bypass duct 22 in order to attach to the nacelle 21. The height of the bifurcation 42 thus completely spans the bypass duct 22.

The bifurcation may be described as being located/aligned bottom dead centre of the gas turbine engine 10 or the engine core 11 of the gas turbine engine.

The further bifurcation 43 may be provided but is not shown in Figure 4. The further/upper bifurcation 43 may be positioned diametrically opposite the lower bifurcation 42. The further bifurcation 43 may be positioned between the engine core 11 and a pylon (not shown) that mounts the engine to the wing of an aircraft.

A profiled external wall 44 defines the external surface of the bifurcation 42, i.e. the surface that will be gas washed by the bypass duct 22 in use. The external wall 44 defines a fairing/housing that extends between the engine core 11 and the inner 50 and outer 52 walls of the bypass duct 22.

The external wall 44 of bifurcation 42 defines a closed interior which houses and protects components extending between the engine core 11 and the nacelle 21. The components may comprise, inter alia: fuel lines; hydraulic lines; conduits; electrical lines; communication links; and other components that support operation of the engine.

The bifurcation 42 provides additional structural rigidity, i.e. a support strut, between the engine core 11 and the nacelle 21.

The external wall 44 of the bifurcation may comprise a metal sheet material, a composite material (e.g. a composite lay-up) or a plastic material (e.g. a moulding). The metal sheet material may be a Ti CP sheet or a Ti / 64 sheet material.

In the examples of Figures 4 to 8, the bifurcation 42 comprises a conduit 46 extending the length of the bifurcation, i.e. between the engine core 11 and nacelle 21. The conduit may be located within the external wall 44 of the bifurcation, e.g. as an internal section of the bifurcation housing. Alternatively, the conduit 46 may be provided on an external portion surface of the external wall 44 of the bifurcation. That is to say the conduit may be formed as an adjoining portion/section of the bifurcation, attached to the external wall 44.

The conduit 46 extends along/through the bifurcation to provide a drainage pathway from the engine core 11 to the nacelle 21, e.g. to a drain point in the nacelle for communication with an ambient environment (i.e. outside of the engine power plant).

The conduit 46 comprises an inlet 54 that extends/opens through the wall 50 into the interior of engine core 11, e.g. into the engine core casing, to provide a fluid pathway into the conduit 46 from the engine core 11.

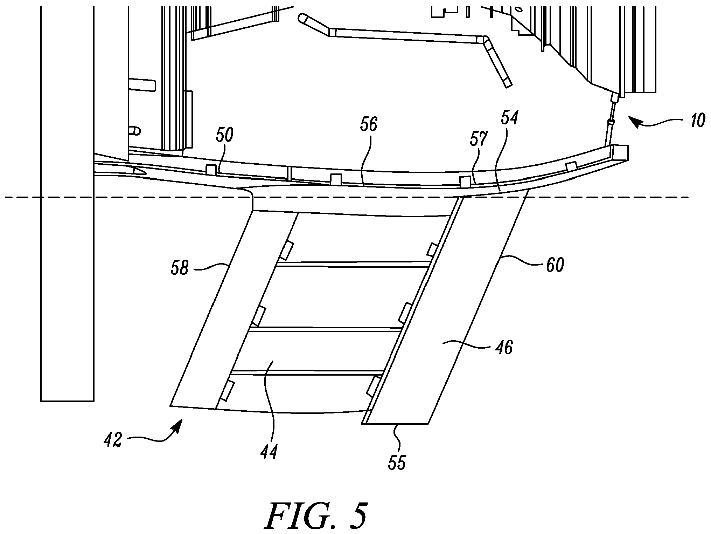

As shown in **Figure 5**, at least a portion of the inlet 54 is provided on a lowermost portion 56 of the outer casing wall 50 of engine core 11. The engine core 11 and/or wall 50 comprises a fluid trap 57 located adjacent the lowermost portion 56 of the engine core 11. The fluid trap 57 is fluidly connected to the inlet 54.

The fluid trap 57 may comprise a reservoir or basin formation in the outer casing wall 50, e.g. around the end of the bifurcation and/or inlet 54.

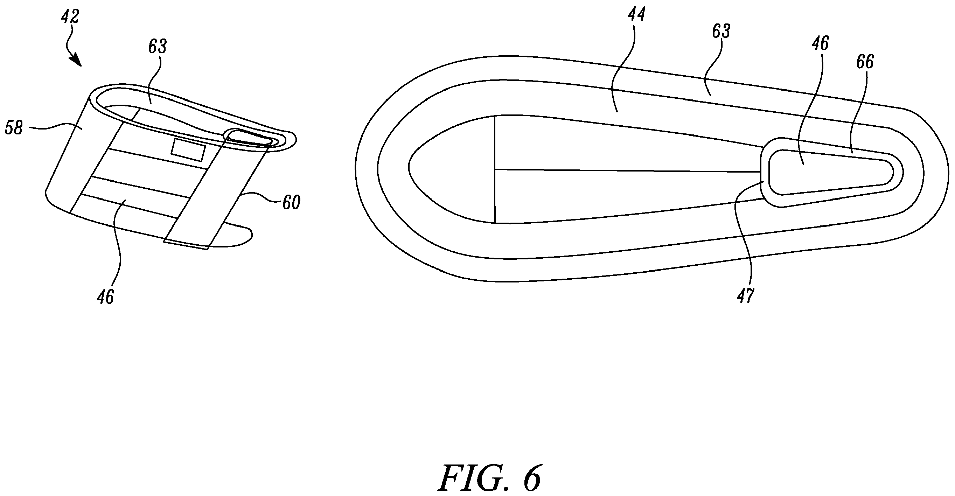

As shown in **Figure 6**, the profile of the bifurcation may widen towards the inlet end of the conduit 46, i.e. adjacent the outer casing wall 50, so as to define a mouth or rim 63 on the interior of the outer casing wall 50. The bifurcation may be curved/tapered in this regard towards the outer casing wall 50, i.e. to provide an outwardly curved rim adjoining the outer casing wall 50.

The conduit 46 comprises an outlet 55 that opens at the opposing end of the conduit 46 from the inlet. The outlet 55 is fluidly connected to the ambient environment via a drain exit adjacent the outlet 55, i.e. within the nacelle 21.

The conduit 46 may comprises an outwardly extending rim 66 at the inlet end, e.g. a mouth formation. The rim 66 may be shaped so as to correspond to the shape of the wall 50 and/or rim 66 of the conduit 46, e.g. at the interface between the conduit 46 and wall 50.

The conduit 46 comprises a fire-resistant material. The conduit may comprise titanium. The conduit may comprise Grade 1 titanium (commercially pure titanium). The conduit may comprise a different material to that of the external wall 44 of the bifurcation. The conduit may be formed of the same material as the casing wall 50.

In general terms the conduit will be formed from material which has been proven to be fire proof by material choice. Examples of this are Ti =/> 0.45 mm thick, Ally (aluminium) =/> 6 mm thick, and steel =/> 0.40 mm thick.

The conduit 46 comprises a wall thickness. The thickness may be varied in combination with the material selection to ensure it achieves its fire-proof specification. An example is a Ti CP conduit which could potentially have a wall thickness of between 0.9 mm and 2.0 mm, e.g. with an actual value of 1.2 mm or between 1.1 and 1.6 mm.

The bifurcation 42 and/or conduit 46 extend in a generally radial direction from the engine core 11. The bifurcation 42 and/or conduit 46 may be angled with respect to the engine core 11, i.e. obliquely angled with respect to engine axis 9. The bifurcation 42 and /or conduit 46 may be angled (e.g. from its radially inner end to its outer end) towards a front of the gas turbine engine, i.e. towards the fan 23 or engine inlet 12.

The conduit 46 may be parallel with a longitudinal axis of the bifurcation 42 or may be angled at a different angle to that of the bifurcation 42.

As shown in Figure 6, the external wall 44 of bifurcation 42 defines an aerodynamic shape, i.e. a fairing. The housing may take the form of an aerofoil or teardrop in section. The bifurcation 42 comprises a leading edge 58 and a trailing edge 60. The leading edge 58 is direction towards the front of the gas turbine engine and the trailing edge 60 is directed towards the rear of the gas turbine engine.

In examples described herein, the conduit 46 is configured to provide a structural part of the bifurcation 42 and/or its external wall 44. The bifurcation may be of equivalent strength, rigidity or stiffness to that of the external wall 44.

Additionally or alternatively, the conduit may be shaped to define a partition of the bifurcation, isolating a first internal volume of the bifurcation from a further internal volume of the partition within the conduit. The conduit may comprise a wall, or wall portion, that extends between opposing side walls of the bifurcation, e.g. in section. In the example of Figure 6, the opposing side walls of the bifurcation 42 each extend form the leading edge 58 to the trailing edge 50, i.e. such that the bifurcation has a longitudinal axis in section. The wall of the conduit may extend completely between the side walls so as to provide a strengthening partition through the bifurcation. The wall of the conduit may be oriented laterally/perpendicularly with respect to the longitudinal axis of the bifurcation and/or engine.

The conduit 46 is configured to conform to, and/or form part of, a portion of the cross-sectional profile of the bifurcation 42. In the example shown in figure 6, the conduit 46 is located in the trailing edge 60 of the bifurcation. Thus the conduit 46 adopts a tapered or substantially triangular cross-sectional shape, so as to conform to the cross-sectional shape of the inner surface of the external wall 44. It can be appreciated that the conduit 46 may comprise any cross-sectional shape conforming to the profile of the bifurcation, depending on where the conduit 46 is located within the bifurcation 42. For example, if the conduit 46 were located in the leading edge 58, the conduit 46 would adopt a more bulbous cross-sectional shape of the inner surface of the housing at the leading edge 58 (i.e. substantially bullet shaped).

In the example of Figure 6, a wall 47 of the conduit defines a partition wall, separating the conduit interior from the remainder of the bifurcation interior.

The conduit 46 has a cross-sectional area suitable to ensure that the outlet/exit from the engine casing (i.e. the fire zone) can expel possible leaked fluid over a time period sufficient to meet conventional regulations. This may be calculated by calculating the maximum possible fluid leak rate in the zone and worst-case scenario in terms of the minimum pressure difference between interior of the core zone/casing and ambient pressure. In the present examples, the conduit cross-sectional area may be greater than or equal to 15, 20 or 25 square inches (96.8, 129.0 or 161.3 square centimetres respectively).

The cross-sectional area of the conduit 46 may be greater than or equal to, for example, 0.06, 0.08, 0.10, 0.12, 0.14, 0.16, 0.18 or 0.2 of the cross-sectional area of the bifurcation. However the flow requirements for the cross-sectional area of the conduit are ultimately independent of the area of the bifurcation as a whole, since the bifurcation size is affected by structural requirements and service routing through the bifurcation.

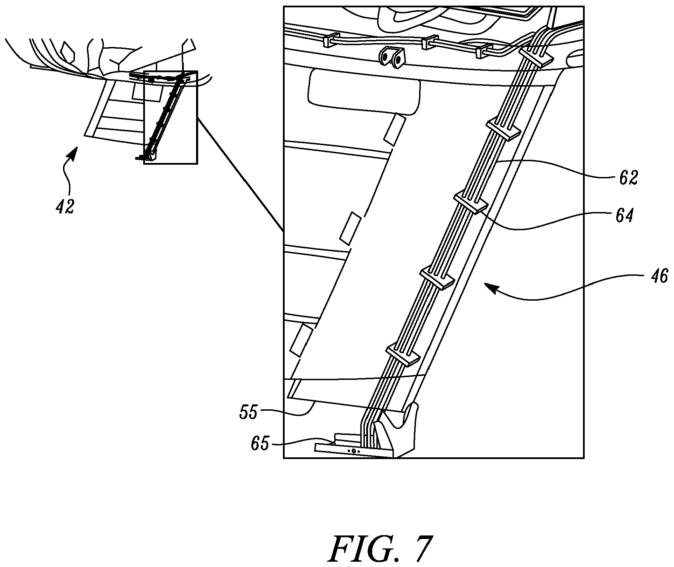

As shown in **Figure 7**, the conduit 46 comprises at least one drain pipe 62. The drain pipe 62 may be connected to specific parts of the gas turbine engine, e.g. within the engine core 11, that have specific drainage of flow requirements. The drain pipes 62 may drain fluids into the nacelle and/or to the ambient environment at drain 65. The drain pipe 62 is mounted within the conduit 46 using one or more mount 64, e.g. a plurality of mounts 64 spaced along the length of the conduit. Each of the mounts 64 may support a plurality of drain pipes 62 running through the conduit. The conduit may thus provide a common path for multiple drain pipes as well as for fluid collecting/pooling in the engine core casing itself.

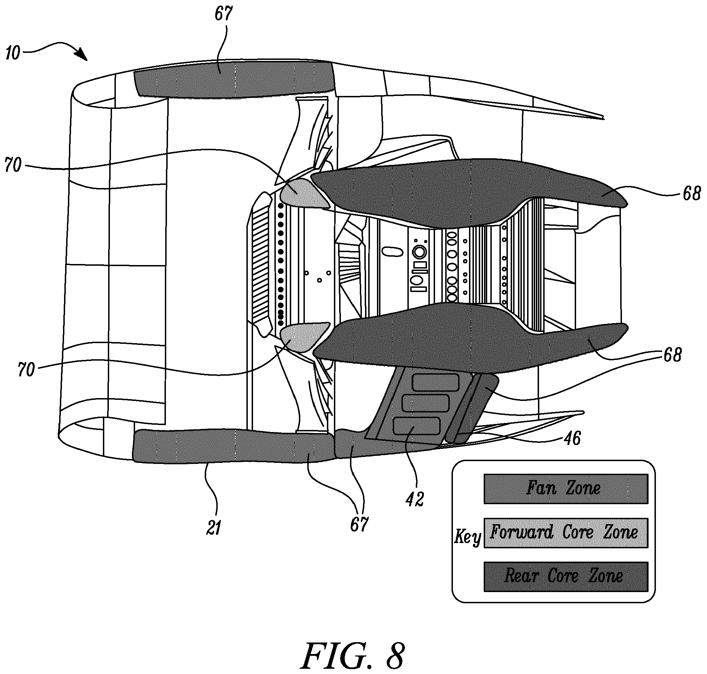

As shown in **Figure 8**, a gas turbine engine of the type described herein is shown with outlines of its different/separate zones. The engine comprises a first zone 67 and the second zone 68. The engine may further comprise a third zone 70.

The first zone 67 comprises a fore zone of the nacelle 21, referred to as the fan zone, which is not a fire zone. Components located within the first zone 67 may have less stringent requirements for fire-resistant design.

The second zone 68 comprises a main/rearward part of the engine core 11, i.e. the engine core casing interior. The second zone 68 is a fire zone. Components located within the second zone 68 thus have more stringent requirements for fire-resistant design.

it can be seen that the conduit 46 is provided with the second zone 68, i.e. in communication with the second zone 68 to allow fluid to drain therefrom. Therefore, the conduit 46 interior has more stringent requirements for fire-resistant design.

However the remainder of the bifurcation 42, i.e. the remainder of the interior of the wall 44 that is external of the conduit 46 is isolated from the fire zone 68 by the conduit wall and is provided with the first zone 67. Therefore, the housing may have less stringent requirements for fire-resistant design.

During operation, fluids may leak into the engine core 11 (for example, due to a burst fuel pipe). Under the action of gravity, fluids flow towards the lowermost portion 56 of the engine core 11 and into the fluid trap 57. The fluid then enters the conduit 46 via inlet 54 and drains through the conduit towards an outlet 55. Finally, the fluid drains to ambient pressure (outside of the engine power plant) via a drain exit.

Any leaking of fluid in the engine core 11 may be drained by the conduit under action of gravity. However, actuators (for example, pumps) may be provided in the engine core 11 or conduit 46 to expedite the removal of fluids.

The conduit thus provides a drainage feature for a fire zone such that the zone can empty of leaked liquid (e.g. fuel) quickly, whilst isolating other zones from the fire risk.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(MS⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The gas turbine engine and/or the bifurcation structure of the present disclosure can provide various advantages.

The present disclosure allows fluids, such as fuel, oil or water, to drain from the core.

The present disclosure allows the fluids to drain under the action of gravity and/or the pressure difference between the core zone interior and ambient.

The present disclosure provides a fire-resistant pathway in which flammable fluids can drain from the engine core.

The present disclosure permits drainage of the fluids within a predefined time limit.

The present disclosure permits efficient packing of the bifurcation.

The present disclosure can provide support for drain pipes within the conduit.

The present disclosure provides increased geometrical stiffness and structural rigidity to the bifurcation.

The present disclosure reduces the need for the entire bifurcation, or other connected zones, to be fire compliant, thus leading to weight and cost benefits.

The skilled person will appreciate that except where mutually exclusive, a feature or parameter described in relation to any one of the above aspects or embodiments may be applied to or combined with any other aspect or embodiment, except where mutually exclusive.

It will be understood that the invention is not limited to the embodiments above-described and various modifications and improvements can be made without departing from the concepts described herein but within the scope of the following claims. Except where mutually exclusive, any of the features may be employed separately or in combination with any other features and the disclosure extends to and includes all combinations and sub-combinations of one or more features described herein.

## Claims

1. A gas turbine engine (10) comprising:
an engine core (11);
an annular flow passage (22) arranged around the engine core; and
a bifurcation (42) extending below the engine core and having a length dimension spanning the annular flow passage (22);
wherein the bifurcation (42) comprises a housing that houses a conduit (46), the conduit having an inlet (54) at an engine core end of the bifurcation and extending along the length of the bifurcation, the conduit comprising a fire-resistant material and being configured to drain fluid from the engine core (11) and through the bifurcation (42) to an outlet (55).

2. The gas turbine engine of claim 1, wherein the housing comprises a profiled outer surface and a sectional profile of the conduit (46) is shaped to follow at least a portion of the profile of the outer surface.

3. The gas turbine engine of claim 1 or 2, wherein the conduit (46) comprises a different material to the housing and provides structural reinforcement for the housing.

4. The gas turbine engine of any preceding claim, the inlet (54) of the conduit (46) is located at a lowermost portion of the engine core (11).

5. The gas turbine engine of any preceding claim, wherein the bifurcation (42) comprises a leading edge (58) and a trailing edge (60), the conduit (46) being located in the trailing edge of the bifurcation.

6. The gas turbine engine of claim 5, wherein the conduit (46) is tapered or triangular in sectional profile.

7. The gas turbine engine of any preceding claim, wherein the conduit (46) has a substantially constant sectional profile along its length.

8. The gas turbine engine of any preceding claim, wherein the conduit (46) extends the full length of the bifurcation (42) so as to isolate an interior of the conduit from a remainder of the interior of the bifurcation.

9. The gas turbine engine of any preceding claim, wherein the fire resistant material is titanium.

10. The gas turbine engine of any preceding claim, comprising one or more drain pipe (62) mounted within the conduit (46).

11. The gas turbine engine of any preceding claim, wherein the engine core (11) comprises a fluid trap (57) that collects fluid for disposal through the conduit (46) of the bifurcation (42).

12. The gas turbine engine of any preceding claim, wherein the outlet (55) of the conduit (46) opens to a drain within a nacelle structure surrounding the annular flow passage.

13. The gas turbine engine of any preceding claim, wherein the outlet (55) of the conduit (46) drains to ambient.

14. The gas turbine engine of any preceding claim, wherein the engine core (11) comprises a turbine, a compressor, and a core shaft connecting the turbine to the compressor; and the gas turbine engine (10) further comprises:
a fan (23) located upstream of the engine core, the fan comprising a plurality of fan blades;
a fan case; and
a gearbox (30) that receives an input from the core shaft and outputs drive to the fan so as to drive the fan at a lower rotational speed than the core shaft.

15. The gas turbine engine of claim 14, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine (17), the second compressor (15), and the second core shaft (27) are arranged to rotate at a higher rotational speed than the first core shaft (26).
